# EUROPEAN PATENT SPECIFICATION

(11) **EP 1 134 905 B1**
(45) Date of publication and mention of the grant of the patent: **25.05.2005**
(21) Application number: 01302334.6
(22) Date of filing: 14.03.2001
(51) Int. Cl.: H04B 1/20, H04B 1/16, G08C 23/00, G08C 23/04

(54) **Remote controlled electronic apparatus and remote control method thereof**
Verfahren und Vorrichtung zur elektronischen Fernbedienung
Procedé et dispositif de commande à distance électronique

(30) Priority: 15.03.2000 JP 2000077795
(43) Date of publication of application: 19.09.2001
(73) Proprietor: Sony Corporation, Tokyo 141-0001 (JP)
(72) Inventor: Amano, Toshio, Shinagawa-ku, Tokyo (JP); Konuma, Kenichi, Shinagawa-ku, Tokyo (JP); Ueki, Tochihisa, Ichinomiya-shi, Aichi-ken (JP)
(74) Representative: Ayers, Martyn Lewis Stanley

(56) References cited:
- EP-A- 0 610 700
- EP-A- 0 766 215
- EP-A- 0 795 966
- DE-A- 3 110 929

## Description

The present invention relates to a remote controlled electronic apparatus equipped with a standby power source kept in an active state even when the electronic apparatus is not in operation.

Most of the recent electronic apparatus are equipped with a light sensor to receive incident light modulated by infrared rays for example, and have a remote control function for operating the electronic apparatus by receiving the infrared rays radiated from a remote controller. In order to utilize such a remote control function, a standby power source is provided therein for holding required data even when the electronic apparatus is not in operation, including the on/off state of a main power source for the electronic apparatus, information relative to a timer for the apparatus, and further manipulative information.

For the purpose of curtailing the standby power, there has been known heretofore a method of setting a controlling microcomputer of the electronic apparatus in a sleep mode at its reception standby time to thereby reduce the power consumption. When the electronic apparatus is placed in a reception standby state, a sleep mode is selected to stop the entire functions of the controlling microcomputer by halting its clock. This mode is used frequently in view of energy saving. When a specific signal is inputted in case the controlling microcomputer is in such a sleep mode, the controlling microcomputer is reset automatically to the former state in response to the input signal. Reset to the former state from the sleep mode is termed "wake-up".

The electronic apparatus is placed in its reception standby state by a control signal transmitted from a remote controller, and then the controlling microcomputer is placed in a sleep mode. In this sleep mode, there may arise a problem that, if any noise derived from external light of a fluorescent lamp or the like is received, such noise may be recognized erroneously as a control signal. In this case, the controlling microcomputer is caused to wake up, and the power is supplied thereto for enabling the microcomputer to decode a remote control signal, whereby it is rendered impossible to achieve the principal purpose of reducing the power consumption in the reception standby mode.

It is therefore an object of the present invention to accomplish improvements in a remote controlled electronic apparatus, wherein a control signal is supplied via a filter to a control unit, and the filter is actuated in a reception standby mode so as to prevent a microprocessor, which is in a low power state, from being reset by any external light noise, hence suppressing the power consumption. Further, when the controlling microcomputer has been reset to its operating state, the filter is opened so that the apparatus is enabled to respond to a remote control signal.

In the improvement, a plurality of filters may be prepared in such a manner as to be selectively switchable and enhanced functionally in the case of any erroneous operation or malfunction due to some noise, whereby setting can be so performed as to comply with ambient noise in the environment around the electronic apparatus, hence minimizing the erroneous operation and suppressing the power consumption in the reception standby mode.

According to a first aspect of the present invention, there is provided a remote controlled electronic apparatus which comprises a filter for attenuating a noise component included in a remote control signal, and a control unit for decoding the remote control signal transmitted via the filter. In this apparatus, when the remote control signal has been decoded and regarded as a power cutoff instruction, the control unit demagnetizes a relay to place the electronic apparatus in its reception standby mode and to set itself in a low power state, and then outputs a filter control signal to actuate the filter.

According to a second aspect of the present invention, there is provided an electronic apparatus wherein, upon detection of a fixed-width pulse included in a remote control signal, a control unit is caused to wake up from a low power state and then outputs a filter control signal to halt the function of a filter.

According to a third aspect of the present invention, there is provided an electronic apparatus which comprises a filter for attenuating a predetermined frequency component of a remote control signal composed of a fixed-width pulse and a succeeding control code, and a control unit for decoding a remote control signal supplied via a first input terminal, wherein, when the control signal has been regarded as a power cutoff signal, a relay is demagnetized to place the apparatus in its reception standby mode and to set itself in a low power state, thereby disabling the first input terminal from accepting the remote control signal. And in response to the fixed-width pulse included in the remote control signal supplied via the filter at a second input terminal, the control unit releases itself from the low power state and enables the first input terminal to accept the remote control signal again.

According to a fourth aspect of the present invention, there is provided an electronic apparatus wherein, if a control code is not existent within a predetermined time after a release from a low power state to wake up the control unit, another filter control signal is outputted to further enhance the noise eliminating function of the filter, and then the control unit is placed in the low power state again.

According to a fifth aspect of the invention, there is provided an electronic apparatus wherein its low power state is such that a clock or execution of an instruction is at a halt in a control unit.

According to a sixth aspect of the invention, there is provided a remote control method for an electronic apparatus. The method comprises a step of decoding a remote control signal composed of a fixed-width pulse and a succeeding control code; and a step of executing, upon decision that the decoded control signal is a power cutoff instruction, predetermined attenuation of a noise component superposed on the remote control signal to set a control unit in a low power state, and a step of demagnetizing a relay to place the apparatus in a reception standby mode.

According to a seventh aspect of the invention, there is provided a method for remote control of an electronic apparatus by detecting a fixed-width pulse included in a remote control signal, and then releasing the control unit from its low power state while stopping the action of attenuation.

According to an eighth aspect of the invention, there is provided a method for remote control of an electronic apparatus, comprising a step of decoding a remote control signal supplied via a first input terminal and, upon decision that the decoded control signal is a power cutoff instruction, demagnetizing a relay to place the apparatus in a reception standby mode and to set a control unit in a low power state, and disabling the first input terminal from accepting the remote control signal; a step of attenuating a predetermined frequency component of the remote control signal; and a step of making a decision as to whether a fixed-width pulse included in the attenuated remote control signal is existent or not and, upon detection of the fixed-width pulse, releasing the control unit from the low power state and enabling the first input terminal to accept the remote control signal again.

And according to a ninth aspect of the invention, there is provided a method for remote control of an electronic apparatus by releasing the control unit from a low power state to wake up the same and, if a control code is not existent within a predetermined time after such wake-up, outputting another filter control signal different from one filter control signal to thereby further enhance the attenuation of noise, and then placing the control unit in the low power state again.

The above and other features and advantages of the present invention will become apparent from the following description which will be given with reference to the illustrative accompanying drawings.
Fig. 1 is a circuit diagram of a remote controlled electronic apparatus in a first embodiment of the present invention;
Fig. 2 is a flowchart of a remote control routine executed in a remote controlled receiving apparatus;
Fig. 3 is a waveform chart of a remote control signal in the first embodiment;
Fig. 4 shows essential component parts of a remote controlled electronic apparatus in a second embodiment of the present invention;
Fig. 5 is a flowchart of a remote control routine executed in the second embodiment of Fig. 4;
Fig. 6 shows essential component parts of a remote controlled electronic apparatus in a third embodiment of the present invention;
Fig. 7 shows essential component parts of a remote controlled electronic apparatus in a fourth embodiment of the present invention;
Fig. 8 shows essential component parts of a remote controlled electronic apparatus in a fifth embodiment of the present invention; and
Fig. 9 is a flowchart of a remote control routine executed in the fifth embodiment of the present invention.

Hereinafter the present invention will be described in detail with reference to some preferred embodiments shown in the accompanying drawings.

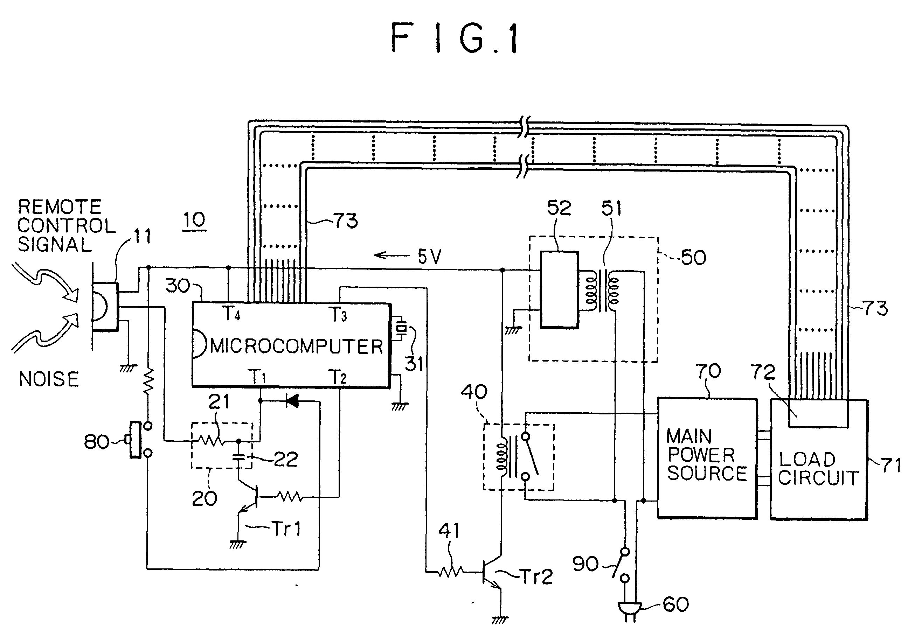

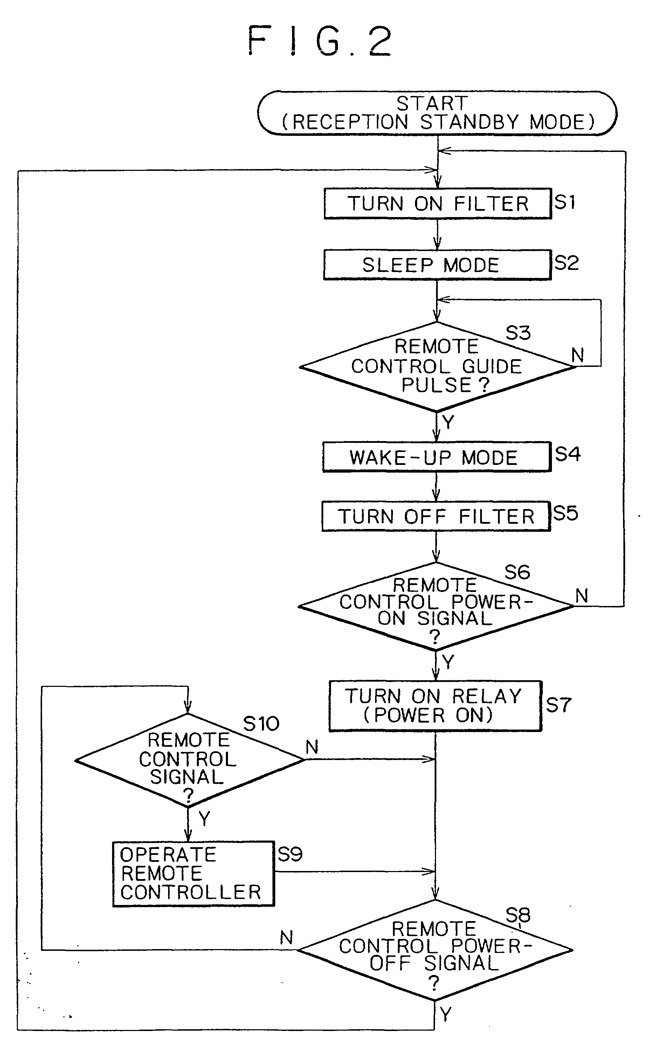

To begin with, an explanation will be given on a first embodiment of the invention with reference to Figs. 1 and 2. Fig. 1 is a circuit diagram schematically showing a power supply line in an electronic apparatus such as a television receiver, a video deck or the like, particularly in a first embodiment of the present invention which represents a remote controlled electronic apparatus. And Fig. 2 is a flowchart of a remote control routine to be executed in such an apparatus.

The remote controlled electronic apparatus 10 in this embodiment comprises a light sensor 11 for receiving a control signal from an unshown remote controller; a low pass filter 20 consisting of a resistor 21 and a capacitor 22; a transistor Tr1 for controlling the low pass filter 20; a controlling microcomputer 30 having a clock source 31; a standby power source 50 consisting of a transformer 51 and a rectifier circuit 52; a relay switch 40 for turning on a main power source 70 to supply an operating power to a load circuit 71; a transistor Tr2 for driving the relay switch 40; a power switch 90; an AC plug 60; and a signal line 73 for connecting the microcomputer 30 to a system controller 72 of the load circuit 71 so as to control the load circuit 71 by a remote control signal.

The remote controlled electronic apparatus 10 is supplied with an AC power through the AC plug 60, so that a DC voltage of, e.g., 5V obtained from the transformer 51 and the rectifier circuit 52 of the standby power source 50 is supplied to a terminal T₄ of the controlling microcomputer 30.

In a wake-up mode, the controlling microcomputer 30 is rendered controllable by means of a remote controller, and a control signal is outputted to the load circuit 71 via the signal line 73.

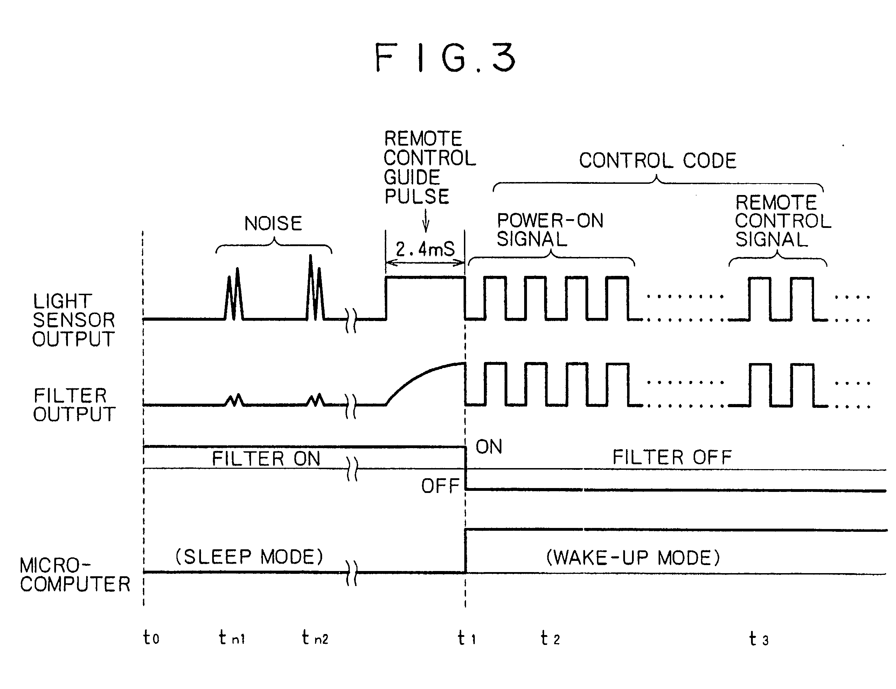

Next, the operation performed in the first embodiment will be described below with reference to a flowchart of Fig. 2 and a waveform chart of Fig. 3 showing the remote control signal.

Suppose now that, in an initial state (t₀), the remote controlled electronic apparatus 10 is set in its reception standby mode as the controlling microcomputer 30 executes a power-off control action in response to the remote control signal.

At step S1, the controlling microcomputer 30 outputs, in succession to the power-off control action, a filter control signal from a filter control terminal T₂ to turn on the transistor Tr1, thereby actuating the filter 20 to attenuate a high-frequency signal component. At step S2, the controlling microcomputer 30 itself is set in a sleep mode. In this sleep mode, the controlling microcomputer 30 is in a clock halt state.

At step S3 during t₀ - t₂, the microcomputer 30 responds to a guide pulse signal from the remote controller inputted to a wake-up terminal which serves also as a remote control signal input terminal T₁. The guide pulse signal from the remote controller has a fixed width of, e.g., 2.4 ms, and this pulse width is detected to be regarded as wake-up.

In the sleep mode, the controlling microcomputer 30 may be placed in a state to halt execution of an instruction without halting the clock source 31. In this case, the controlling microcomputer 30 decodes the control signal immediately after wake-up, hence capable of decoding the control signal as in a normal state.

The signal inputted via the light sensor 11 during the sleep mode is so processed that its high-frequency signal component is attenuated through the filter 20 as represented by the filter output waveform in Fig. 3, whereby any external light noise derived from a fluorescent lamp or the like is eliminated. Consequently, the controlling microcomputer 30 is kept free from erroneously recognizing the noise output of the light sensor 11 as a control signal, thereby removing a failure that the wake-up mode is induced in error by the noise. Therefore, during the time of tₙ₁ - tₙ₂, the controlling microcomputer 30 is maintained in the sleep mode so that a low power consumption is held continuously.

Upon detection of a power-on signal including the guide pulse transmitted from the remote controller, the guide pulse is not attenuated sufficiently in the filter 20, and the filter output therefrom is fed to the terminal T₁ of the controlling microcomputer 30. Subsequently the controlling microcomputer 30 recognizes a fall point t₁ of the fixed-width guide pulse, and then the operation proceeds from the sleep mode to a wake-up mode at step S4. In this embodiment, it is also possible to wake up the controlling microcomputer 30 by depressing a power key 80 of the electronic apparatus.

After being set in the wake-up mode, the controlling microcomputer 30 outputs, at step S5, a filter control signal from its control terminal T₂ to turn off the transistor Tr1, thereby switching off the action of the filter 20.

A control code succeeding the guide pulse is inputted to the controlling microcomputer 30 via the terminal T₁, and a decision is made at step S6 as to whether the control code is a power-on signal or not. If the result of this decision is affirmative, a relay-on signal is outputted at step S7 to a relay control terminal T₃ to thereby turn on the transistor Tr2, which then drives the relay switch 40 to switch on its contact, whereby a main power is supplied from the main power source 70 to the load circuit 71. Thereafter the operation proceeds to steps S8, S9 and S10, where the electronic apparatus is controlled by manipulation of the remote controller.

If a power-off signal is transmitted from the remote controller when the contact of the relay switch 40 is at its on-position, the operation returns to step S1, so that the controlling microcomputer 30 turns on the action of the filter 20 again, and subsequently the controlling microcomputer 30 is set in the sleep mode at step S2, whereby a low power consumption mode is selected.

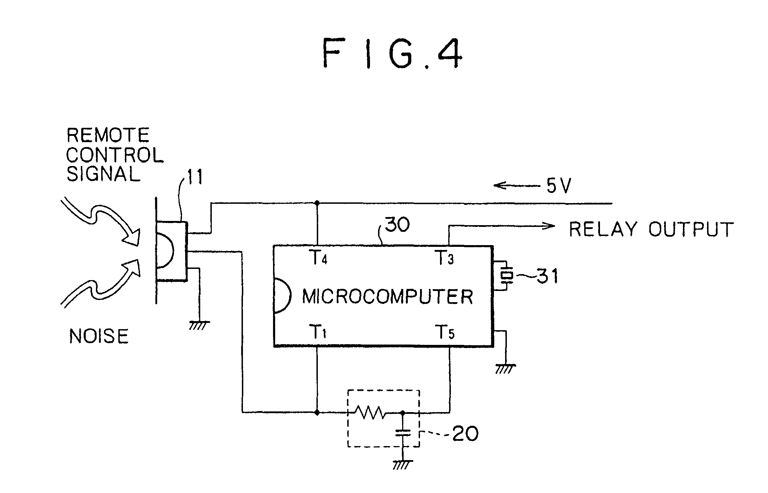

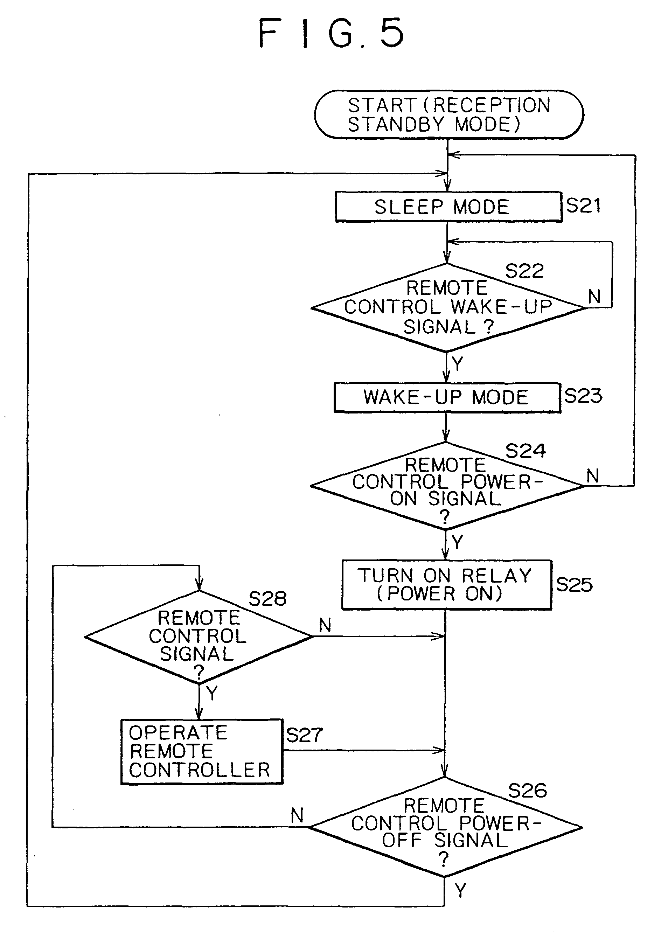

Fig. 4 is a partial circuit diagram of a remote controlled electronic apparatus in a second embodiment of the present invention, showing only a light sensor 11 and peripheral circuits around a controlling microcomputer 30. And Fig. 5 is a flowchart of a remote control routine executed therein. As shown in Fig. 4, the controlling microcomputer 30 has an interrupt input terminal T₅ responsive to a wake-up signal, and a control signal input terminal T₁ not responsive before shift to a wake-up mode.

Now a control flow of the microcomputer 30 will be explained below with reference to the flowchart of Fig. 5. The processing routine starts similarly to Fig. 2, and it is supposed here that the controlling microcomputer 30 has been set in its reception standby mode. At step S21, the controlling microcomputer 30 itself is set in a sleep mode.

At step S22, a decision is made as to whether a wake-up signal is existent or not. When a guide pulse is inputted to the controlling microcomputer 30 via a filter 20 and a terminal T₅, the controlling microcomputer 30 proceeds, at step S23, from the sleep mode to the wake-up mode.

At step S24, if a control code succeeding the guide pulse is regarded as a power-on signal, a signal for turning on a relay switch 40 is outputted from a terminal T₃, and a power is supplied from a main power source 70 to a load circuit. Since the subsequent operation of the controlling microcomputer 30 is the same as in the aforementioned first embodiment, a repeated explanation thereof is omitted here. However, in this second embodiment, the filter on/off control action is not necessary.

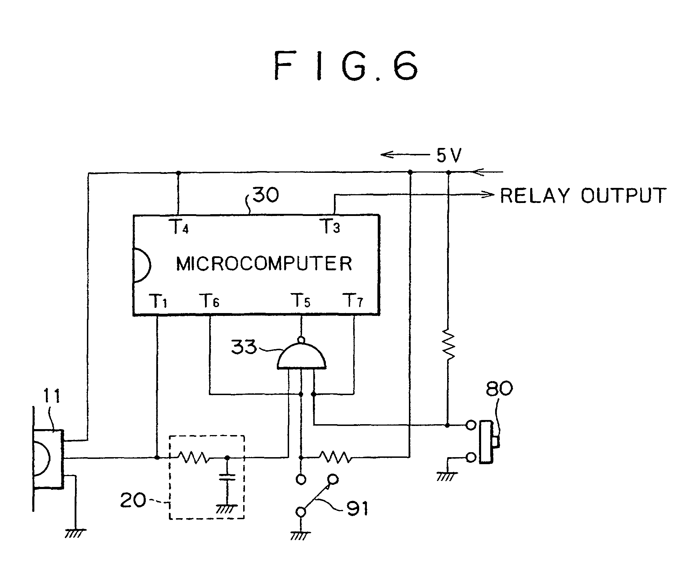

Fig. 6 is a partial circuit diagram of a third embodiment of the present invention, showing only a light sensor 11 and peripheral circuits around a controlling microcomputer 30. As other component parts are the same as those in the first embodiment, a repeated explanation thereof is omitted here.

In the third embodiment, a control signal having passed through a filter 20, an output of a power key 80 and an output of a second power switch 91 are inputted to an external input interrupt terminal T₅ via a NAND circuit 33. The power key 80 consists of a push-button switch provided in the electronic apparatus for waking up the controlling microcomputer 30 from its sleep mode. The second power switch 91 consists of a toggle switch or the like to turn on and off the power while interlocking mechanically with the power switch 90 shown in Fig. 1, thereby switching off entire display units relative to the reception standby mode and other modes of a load circuit 71.

In the third embodiment, if either the output of the power key 80 or the output of the second power switch 91 is inputted to the NAND circuit 33 in addition to the output of the filter 20 to which a control signal is supplied, then the external input interrupt terminal T₅ is changed to a high (H) level to wake up the controlling microcomputer 30. When a signal is fed to the input terminal T₇ of the power key 80 and the input terminal T₆ of the second power switch 91, the controlling microcomputer 30 outputs a relay control signal from its terminal T₃, so that the power from the main power source 70 is supplied to the load circuit 71.

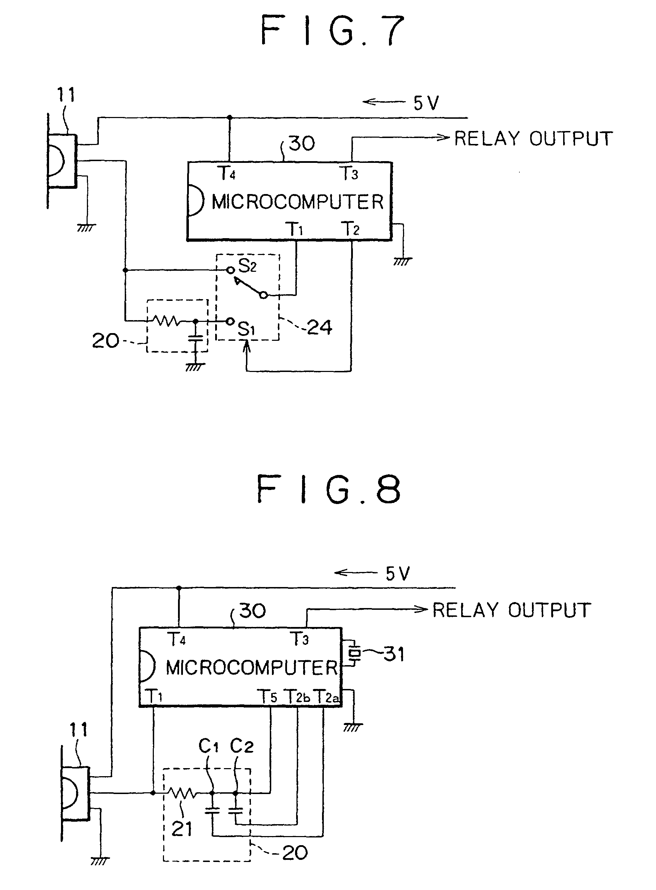

Fig. 7 is a partial circuit diagram of a fourth embodiment of the present invention, showing only a light sensor 11 and peripheral circuits around a controlling microcomputer 30. As other component parts are the same as those in the first embodiment, a repeated explanation thereof is omitted here.

In a sleep mode, a switch 24 is connected to its one contact S₁ by a filter control signal outputted from a terminal T₂. Therefore, a control signal from the light sensor 11 passes through a filter 20. And when this signal is noise, the controlling microcomputer 30 is not actuated to wake up. However, when the signal is a guide pulse of a predetermined width mentioned, the controlling microcomputer 30 is shifted from the sleep mode to the wake-up mode, wherein a filter control signal is outputted from the terminal T₂, and the switch 24 is changed to another contact S₂. Consequently, a control code succeeding the guide pulse is inputted directly to the terminal T₁ of the controlling microcomputer 30 without passing through the filter 20. The operation of shift to a power-on state or reception standby mode after wake-up and also the on/off action of the filter after power-off are the same as those shown in the flowchart of Fig. 2.

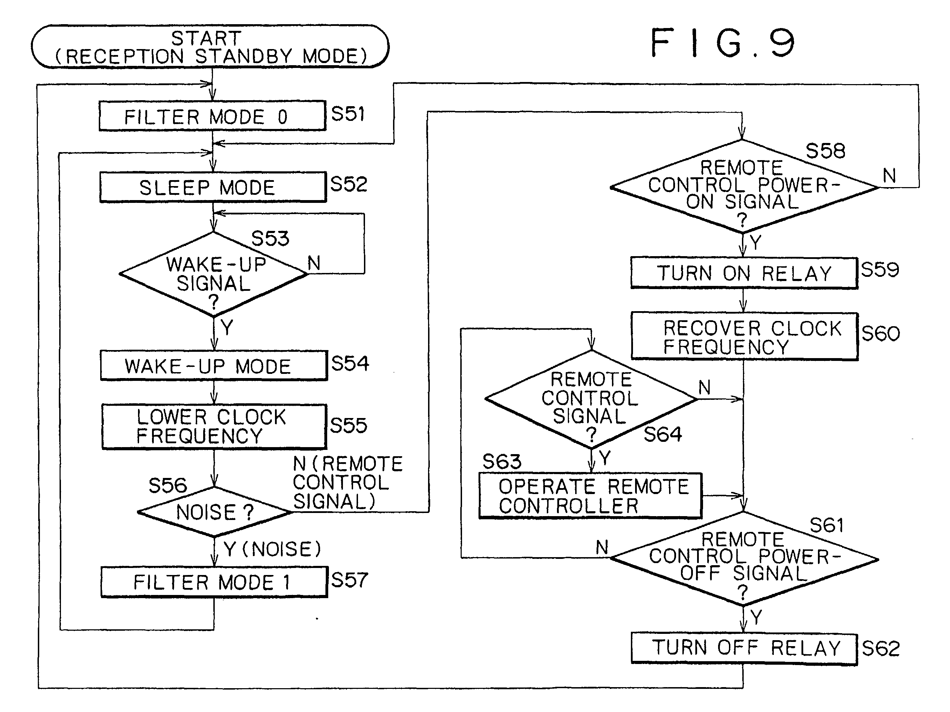

Figs. 8 and 9 represent a fifth embodiment of the present invention, in which Fig. 8 shows only a light sensor 11 and peripheral circuits around a controlling microcomputer 30. As other component parts are the same as those in the first embodiment, a repeated explanation thereof is omitted here. Fig. 9 is a flowchart of a control routine executed in the microcomputer 30.

A first feature of the fifth embodiment resides in that, as shown in Fig. 8, a filter 20 has a capacitor C₁ and another capacitor C₂ of a greater capacitance, whereby its filtering function is enhanced against noise. Such two capacitors C₁ and C₂ are controlled individually via, e.g., filter control terminals T₂ₐ and T_{2b} respectively. Hereinafter one state where the capacitor C₁ is connected to constitute the filter 20 will be termed "mode 0", and another state where the capacitor C₂ is connected to constitute the filter 20 will be termed "mode 1".

And a second feature of the fifth embodiment resides in that, when the controlling microcomputer 30 in its reception standby state has been shifted from the sleep mode to the wake-up mode, the frequency of a clock source 31 used in the controlling microcomputer 30 is lowered to 1/2 or 1/3, and in a subsequent power on-state, the clock frequency is changed to its former normal value, so that the controlling microcomputer 30 is operated in a power saving condition.

Although the above two features are effective to achieve advantageous results if carried out separately, an explanation will be given below on an example where such two features are carried out simultaneously.

The control routine of Fig. 9 starts as in Fig. 2, and it is supposed now that the controlling microcomputer 30 has been set in its reception standby state. At step S51, there is selected a filter mode 0 where the capacitor C₁ is connected to constitute the filter 20. And at step S52, the controlling microcomputer 30 is set in the sleep mode. Thereafter at step S53, a decision is made as to whether a wake-up signal is existent or not. In this sleep mode, the controlling microcomputer 30 is in a clock halt state, where the interrupt input terminal T₅ recognizes only a guide pulse signal included in the remote control signal. When the guide pulse signal inputted to the terminal T₅ via the filter 20 has been regarded as a wake-up signal, the controlling microcomputer 30 is shifted, at step S54, from the sleep mode to the wake-up mode. And subsequently at step S55, the clock frequency is lowered to 1/2 or 1/3 of the normal frequency to thereby attain a power saving mode. Even when the result of the decision at step S53 signifies that a wake-up signal has been inputted to the controlling microcomputer 30, if the noise alone is detected at step S56 without succeeding input of a remote control signal, the foregoing wake-up signal is regarded as noise, and there is selected, at step S57, a filter mode 1 where the filtering function is enhanced, and then the operation returns to the sleep mode.

At step S56, a decision is made as to whether the control signal is noise or not. When the noise is not detected, a decision is made, at step S58, as to whether a power-on signal is existent or not. And if the result of a decision at step S58 signifies that a power-on signal is existent, the relay is driven at steps S59 and S60 to resume the former normal clock frequency.

Thereafter, if the result of a decision at step S61 signifies that a power-off signal is existent, the relay is turned off at step S62, and then the operation returns to its start. Meanwhile, if the above result signifies that a power-off signal is not existent, the processes at steps S64 - S61 or S64 - S63 - S61 are executed repeatedly until a detection of a power-off signal.

In this embodiment, therefore, the decision for wake-up can be changed in accordance with the noise level to consequently realize further improvement for prevention of any malfunction that may be induced by noise.

The filter mode may altered to mode 0, mode 1, ..., mode n by adding capacitors of further greater capacitances to sequentially enhance the filtering function. Mode 0 may be executed without any filter.

In any embodiment of the present invention, the filter unit may be composed of low pass filters or can be replaced by a circuit capable of discriminating the pulse width.

Moreover, in the sleep mode, the frequency characteristic of the light sensor 11 may be suppressed under control to achieve the desired filtering effect, hence eliminating the necessity of a filter circuit.

Although the present invention has been described hereinabove with reference to some preferred embodiments thereof, it is to be understood that the invention is not limited to such embodiments alone, and a variety of other changes and modifications will be apparent to those skilled in the art without departing from the scope of the invention.

The scope of the invention, therefore, is to be determined solely by the appended claims.

## Claims

1. An electronic apparatus comprising:
a filter (20) for attenuating a predetermined frequency component of a remote control signal composed of a fixed-width pulse and a succeeding control code; and
a control unit (30) for decoding the remote control signal transmitted thereto via said filter (20) and, upon decision that the remote control signal is a power cutoff instruction, demagnetizing a relay (40) thereby placing said apparatus in a reception standby mode, while outputting a filter control signal to actuate (TRI, SI) said filter (20) to attenuate said predetermined frequency component of the remote central signal and setting itself in a low power state.

2. The electronic apparatus according to claim 1, wherein, upon detection of the fixed-width pulse in the low power state, said control (30) unit releases itself from the low power state and stops the attenuation (S5) of said filter (20).

3. An electronic apparatus comprising:
a filter (20) for attenuating a predetermined frequency component of a remote control signal composed of a fixed-width pulse and a succeeding control code; and
a control unit (30) for decoding the remote control signal supplied via a first input terminal (T1) and, upon decision that the remote control signal is a power cutoff instruction, demagnetizing a relay (40) to place said apparatus in a reception standby mode and to set itself in a lower power state, thereby disabling said first input terminal (T1) from accepting the remote control signal;
wherein, when the fixed-width pulse included in the remote control signal supplied via said filter (20) has been received at a second input terminal (T5), said control unit releases itself from the low power state and enables said first input terminal (T1) to accept the remote control signal again.

4. The electronic apparatus according to claim 3, wherein, if the control code is not existent within a predetermined time after a release from the low power state and a stop of said filter (20), said control unit (30) outputs another filter control signal for further enhancing (T2a, T2b, S57) the noise eliminating function of said filter (20), and then places itself in the low power state again.

5. The electronic apparatus according to any preceding claim, wherein said low power state is obtained by halting a clock or execution of an instruction in said control unit (30).

6. A remote control method for an electronic apparatus, comprising:
a step of decoding a remote control signal composed of a fixed-width pulse and a succeeding control code; and
a step of attenuating (S1), upon decision that the decoded remote control signal is a power cutoff instruction (S8), a predetermined frequency component of the remote control signal to set a control unit (30) in a low power state, and
a step of demagnetizing a relay (40) to place said apparatus in a reception standby mode

7. The remote control method according to claim 6, further comprising, upon detection of the fixed-width pulse, a step of releasing (S4) said control unit (30) from the low power state, and bringing the action of attenuation to a halt (S5).

8. A remote control method for an electronic apparatus, comprising:
a step of decoding a supplied remote control signal, via a first input terminal (T1), composed of a fixed-width pulse and a succeeding control code and, upon decision that the decoded control signal is a power cutoff instruction, demagnetizing a relay (40) to place said apparatus in a reception standby mode and to set (S21) a control unit (30) in a low power state, and disabling said first input terminal (T1) from accepting the remote control signal;
a step of attenuating a predetermined frequency component of the remote control signal; and
a step of making a decision (S22) as to whether the fixed-width pulse included in the attenuated remote control signal is existent or not and, upon detection of the fixed-width pulse, releasing (S23) said control unit (30) from the low power state and enabling the first input terminal to accept the remote control signal again.

9. The remote control method according to claim 7 or 8, further comprising a step of enhancing the attenuation (S57) if the control code that succeeds the fixed-width pulse is not existent (S56) within a predetermined time after a release (S54) of said control unit (30) from the low power state and a stop of the attenuation (S55), and then placing said control unit (30) in the low power state again (S52).

## Patentansprüche

1. Elektronische Vorrichtung, mit
einem Filter (20) zum Dämpfen einer vorbestimmten Frequenzkomponente eines Fernsteuersignals, das aus einem Impuls fester Breite und einem nachfolgenden Steuercode aufgebaut ist; und
einer Steuereinheit (30) zum Decodieren des ihr über das Filter (20) übertragenen Fernsteuersignals und Entmagnetisieren eines Relais (40) bei einer Entscheidung, dass das Fernsteuersignal ein Stromabschaltbefehl ist, wodurch die Vorrichtung in einen Empfangsbereitschaftsmodus gesetzt wird, wobei ein Filtersteuersignal ausgegeben wird, um das Filter (20) zu betätigen (TRI, SI), um die vorbestimmte Frequenzkomponente des Fernsteuersignals zu dämpfen, und sie selbst in einen Schwachstromzustand gesetzt wird.

2. Elektronische Vorrichtung nach Anspruch 1, bei welcher sich die Steuereinheit (30) bei einer Erfassung des Impulses fester Breite im Schwachstromzustand selbst aus dem Schwachstromzustand löst und die Dämpfung des Filters (20) stoppt (S5).

3. Elektronische Vorrichtung, mit
einem Filter (20) zum Dämpfen einer vorbestimmten Frequenzkomponente eines Fernsteuersignals, das aus einem Impuls fester Breite und einem nachfolgenden Steuercode aufgebaut ist; und
einer Steuereinheit (30) zum Decodieren des über einen ersten Eingangsanschluss (T1) zugeführten Fernsteuersignals und Entmagnetisieren eines Relais (40) bei einer Entscheidung, dass das Fernsteuersignal ein Stromabschaltbefehl ist, um die Vorrichtung in einen Empfangsbereitschaftsmodus zu setzen und sich selbst in einen Schwachstromzustand zu setzen, wodurch der erste Eingangsanschluss (T1) kein Fernsteuersignal mehr empfangen kann, wobei, wenn der in dem über das Filter (20) zugeführten Fernsteuersignal enthaltene Impuls fester Breite an einem zweiten Eingangsanschluss (T5) empfangen worden ist, die Steuereinheit sich selbst aus dem Schwachstromzustand löst und den ersten Eingangsanschluss (T1) das Fernsteuersignal wieder empfangen lässt.

4. Elektronische Vorrichtung nach Anspruch 3, bei welcher, falls der Steuercode nicht in einer vorbestimmten Zeit nach einem Lösen aus dem Schwachstromzustand und einem Stoppen des Filters (20) vorhanden ist, die Steuereinheit (30) ein weiteres Filtersteuersignal zum weiteren Verbessern (T2a, T2b, S57) der Rauschbeseitigungsfunktion des Filters (20) ausgibt und sich dann selbst wieder in den Schwachstromzustand setzt.

5. Elektronische Vorrichtung nach einem der vorhergehenden Ansprüche, bei welcher der Schwachstromzustand durch Anhalten einer Uhr oder Abbrechen einer Ausführung eines Befehls in der Steuereinheit (30) erzielt wird.

6. Fernsteuerverfahren für eine elektronische Vorrichtung, mit
einem Schritt des Decodierens eines Fernsteuersignals, das aus einem Impuls fester Breite und einem nachfolgenden Steuercode aufgebaut ist; und
einem Schritt des Dämpfens (S1) einer vorbestimmten Frequenzkomponente des Fernsteuersignals bei einer Entscheidung, dass das decodierte Fernsteuersignal ein Stromabschaltbefehl ist (S8), um eine Steuereinheit (30) in einen Schwachstromzustand zu setzen; und
einem Schritt des Entmagnetisierens eines Relais (40), um die Vorrichtung in einen Empfangsbereitschaftsmodus zu setzen.

7. Fernsteuerverfahren nach Anspruch 6, ferner mit einem Schritt des Lösens (S4) der Steuereinheit (30) aus dem Schwachstromzustand und des Abbrechens der Dämpfungswirkung (S5) bei einer Erfassung des Impulses fester Breite.

8. Fernsteuerverfahren für eine elektronische Vorrichtung, mit
einem Schritt des Decodierens eines über einen ersten Eingangsanschluss (T1) zugeführten Fernsteuersignals, das aus einem Impuls fester Breite und einem nachfolgenden Steuersignal aufgebaut ist, und des Entmagnetisierens eines Relais (40) bei einer Entscheidung, dass das decodierte Steuersignal ein Stromabschaltbefehl ist, um die Vorrichtung in einen Empfangsbereitschaftsmodus zu setzen und eine Steuereinheit (30) in einen Schwachstromzustand zu setzen (S21), und des Sperrens des Empfangs des Fernsteuersignals durch den ersten Eingangsanschluss (T1);
einem Schritt des Dämpfens einer vorbestimmten Frequenzkomponente des Fernsteuersignals; und
einem Schritt des Entscheidens (S22), ob der in dem gedämpften Fernsteuersignal enthaltene Impuls fester Breite vorhanden ist oder nicht, und des Lösens (S23) der Steuereinheit (30) aus dem Schwachstromzustand und Ermöglichens des ersten Eingangsanschlusses, das Fernsteuersignal wieder zu empfangen, bei einer Erfassung des Impulses fester Breite.

9. Fernsteuerverfahren nach Anspruch 7 oder 8, ferner mit einem Schritt des Verbesserns der Dämpfung (S57), falls der Steuercode, der dem Impuls fester Breite folgt, nicht in einer vorbestimmten Zeit nach einem Lösen (S54) der Steuereinheit (30) aus dem Schwachstromzustand und eines Stoppens der Dämpfung (S55) vorhanden ist (S56), und dann des Setzens der Steuereinheit (30) wieder in den Schwachstromzustand (S52).

## Revendications

1. Appareil électronique comprenant :
un filtre (20) pour atténuer une composante de fréquence prédéterminée d'un signal de télécommande composé d'une impulsion de largeur fixe et d'un code de commande suivant ; et
une unité de commande (30) pour décoder le signal de télécommande transmis à celle-ci via ledit filtre (20) et, lors du test que le signal de télécommande est une instruction de coupure d'alimentation, pour démagnétiser un relais (40), mettant ainsi ledit appareil dans le mode d'attente de réception, tout en fournissant un signal de commande de filtre pour actionner (TR1, S1), ledit filtre (20) afin d'atténuer ladite composante de fréquence prédéterminée du signal de télécommande et pour se mettre lui-même dans l'état de basse alimentation.

2. Appareil électronique selon la revendication 1, dans lequel, lors de la détection de l'impulsion de largeur fixe dans l'état de basse alimentation, ladite unité de commande (30) se libère elle-même de l'état de basse alimentation et arrête l'atténuation (S5) dudit filtre (20).

3. Appareil électronique comprenant :
un filtre (20) pour atténuer une composante de fréquence prédéterminée d'un signal de télécommande composé d'une impulsion de largeur fixe et un code de commande suivant ; et
une unité de commande (30) pour décoder le signal de télécommande fourni via une première borne d'entrée (T1) et, lors du test que le signal de télécommande est une instruction de coupure d'alimentation, pour démagnétiser un relais (40) pour mettre ledit appareil, dans un mode d'attente de réception et pour se mettre lui-même dans l'état de basse alimentation, empêchant ainsi ladite première borne d'entrée (T1) d'accepter le signal de télécommande ;
dans lequel, lorsque l'impulsion de largeur fixe comprise dans le signal de télécommande fourni via ledit filtre (20) a été reçue sur ladite seconde borne d'entrée (T5), ladite unité de télécommande se libère elle-même de l'état de basse alimentation et permet à ladite première borne d'entrée (T1) d'accepter de nouveau le signal de télécommande.

4. Appareil électronique selon la revendication 3, dans lequel, si le code de commande n'existe pas dans un temps prédéterminé après une libération à partir d'un état de basse puissance et arrêt dudit filtre (20), ladite unité de commande (30) fournit un autre signal de commande de filtre pour améliorer encore (T2a, T2b, S57) la fonction d'élimination de bruits dudit filtre (20) et puis se mettre elle-même de nouveau dans l'état de basse alimentation.

5. Appareil électronique selon l'une quelconque des revendications précédentes, dans lequel ledit état de basse alimentation est obtenu en arrêtant une horloge ou l'exécution d'une instruction dans ladite unité de commande (30).

6. Procédé de télécommande pour un appareil électronique, comprenant :
une étape de décodage du signal de télécommande composé d'une impulsion de largeur fixe et d'un code de commande suivant ; et
une étape d'atténuation (S1) lors du test que le signal de télécommande décodé est une instruction de coupure d'alimentation (S8), une composante de fréquence prédéterminée du signal de télécommande pour régler une unité de commande (30) dans un état de basse alimentation, et
une étape de démagnétisation d'un relais (40) pour mettre ledit appareil dans ledit mode d'attente de réception.

7. Procédé de télécommande selon la revendication 6, comprenant en outre, lors de la détection de l'impulsion de largeur fixe, une étape de libération (S4) de ladite unité de commande (30) de l'état de basse alimentation, et la mise en route de l'action d'atténuation jusqu'à un arrêt (S5).

8. Procédé de télécommande pour un appareil électronique, comprenant :
une étape de décodage d'un signal de télécommande fourni, via une première borne d'entrée (T1), composé d'une impulsion de largeur fixe et d'un code de commande suivant et, lors du test que le signal de commande décodé est une instruction de coupure d'alimentation, démagnétisation d'un relais (40) pour mettre ledit appareil dans un mode d'attente de réception et pour mettre (S21) une unité de commande (30) dans un état de basse alimentation, et invalider ladite première borne d'entrée (T1) d'accepter le signal de télécommande ;
une étape d'atténuation d'une composante de fréquence prédéterminée du signal de télécommande ; et
une étape de réalisation d'un test (S22) pour déterminer si l'impulsion de largeur fixe comprise dans le signal de télécommande atténué est existante ou non et, lors de la détection de l'impulsion de largeur fixe, libération (S23) de ladite unité de commande (30) de l'état de basse alimentation et validation de la première borne d'entrée pour accepter le signal de télécommande de nouveau.

9. Procédé de télécommande selon la revendication 7 ou 8, comprenant en outre une étape d'amélioration de l'atténuation (S57) si le code de commande qui suit l'impulsion de largeur fixe n'existe pas (S56) dans un temps prédéterminé après une libération (S54) de ladite unité de commande (30) dudit état de basse alimentation et un arrêt de l'atténuation (S55), et puis placement de ladite unité de commande (30) de nouveau dans l'état de basse alimentation (S52).
